# EUROPÄISCHE PATENTSCHRIFT

(11) **EP 3 291 671 B1**
(45) Veröffentlichungstag und Bekanntmachung des Hinweises auf die Patenterteilung: **23.10.2019**
(21) Anmeldenummer: 16720818.0
(22) Anmeldetag: 03.05.2016
(51) Int. Cl.: A01K 85/16, A01K 85/18

(54) **ALS WOBBLER AUSGEBILDETER KUNSTKÖDER**
LURE CONFIGURED AS A WOBBLER
AMORCE ARTIFICIELLE RÉALISÉE SOUS FORME DE POISSON NAGEUR

(30) Priorität: 05.05.2015 DE 102015005695
(43) Veröffentlichungstag der Anmeldung: 14.03.2018
(73) Patentinhaber: Gierl, Werner, 94342 Straßkirchen (DE)
(72) Erfinder: Gierl, Werner, 94342 Straßkirchen (DE)
(74) Vertreter: Leske, Thomas
(86) Internationale Anmeldenummer: PCT/EP2016/059855
(87) Internationale Veröffentlichungsnummer: WO 2016/177707

(56) Entgegenhaltungen:
- US-A- 2 542 776
- US-A- 2 881 549
- US-A- 4 141 171
- US-A- 5 992 083

## Beschreibung

Die Erfindung betrifft einen auch als Wobbler bekannten Kunstköder in Form eines Köderfisches für den Fischfang.

Kunstköder oder auch Angelköder, welche in Form eines Köderfisches für den Fischfang, insbesondere für den Raubfischfang, Einsatz finden und welche auch wegen der nachgeahmten Bewegung des Köderfisches als Wobbler bezeichnet werden, sind bekannt. Derartige Wobbler weisen die unterschiedlichsten Konstruktionen auf, wobei die vielfältigen Anforderungen an derartige Wobbler sich in unterschiedlichsten Konstruktionen widerspiegeln. Bei den bekannten Raubfischwobblern soll mit speziellen Ausgestaltungen dafür Sorge getragen werden, dass der Köderfisch in üblicher Weise beim nach dem Auswerfen erfolgenden Einholen, d. h. beim Ziehen im Wasser, sich möglichst wie ein natürlicher Beutefisch bewegt.

In DE 298 04 745 U1 ist ein künstlicher Raubfischköder beschrieben, welcher als Auftriebskörper unter Weglassung einer Beschwerung als schwimmfähiger Körper ausgebildet ist, welcher im Schwanzbereich sich über den Körper des Köders hinauserstreckende Fasern aufweist. Diese Fasern sollen beim Bewegen des Köderfisches durch Ziehen desselben durch das Wasser oder in einer gewässerbedingten Strömung die Lage des Köderfisches stabilisieren, und zwar insbesondere dann, wenn dieser Köderfisch an einer Angelschnur befestigt ist, welche ein Grundgewicht, welches auch als Grundblei bezeichnet wird, aufweist, so dass der Köderfisch als Auftriebskörper in einer gewissen Höhe über dem Grund des Gewässers verharrt und dort in Folge der Strömung und der den Schwanz bildenden Fasern eine schlängelnde Schwimmbewegung vollführt. Wird dieser Köderfisch nun beispielsweise durch Einholen der Angelschnur im Gewässer bewegt, so bewegt sich zunächst das Grundgewicht über den Grund, nicht aber der Köderfisch. Zwar wird der Köderfisch dabei geschont, wenn jedoch die Zugkraft beim Einholen größer ist als die Kraft des Grundgewichtes, wird dieser Fisch in Richtung der Zugkraft der Angelschnur durch das Wasser und schließlich nach oben zur Wasseroberfläche gezogen. Dies könnte einen Raubfisch daran hindern, dieser nicht unbedingt natürlichen Bewegung des Köderfisches zu folgen.

Um zu erreichen, dass derartige Raubfischköder beim Ziehen durch das Gewässer oder, wenn mit einem Grundgewicht gearbeitet wird, beim Stehen des Raubfischköders in einer Gewässerströmung im Wesentlichen einer natürlichen Fischbewegung folgen, ist versucht worden, diese Fischbewegung durch das Vorsehen eines zusätzlichen flossenartigen Teils in der Regel im vorderen Bereich des Kunstköders zu realisieren. Derartige zusätzliche flossenartige, auch als Tauchschaufeln bezeichnete Ausgestaltungen an einem bekannten Kunstköder sind z. B. bekannt aus US 2 542 776 A, US 4 141 171 A, DE 123 635 , DE 4236 848 C2, DE 203 14 054 U1, US 5 99 2083 A, WO 2 005 03 22 47 A1, WO 99 56 536, US 2004/021 63 58 A1, DE 296 06 802 U1 und EP 1 112 685 A1. Diesen bekannten Wobblern ist gemein, dass die flossenartigen Tauchschaufeln, welche im vorderen Bereich derartiger Wobbler angebracht sind, stets nach unten weisen, wobei der Angriffshaken bzw. Befestigungshaken für die Angelschnur in Schwimmposition darüberliegend angeordnet ist. Wenn bei einer derartigen Anordnung die Angelschnur zum Einholen gezogen wird oder wenn in Folge einer Gewässerströmung der Wobbler den in seine Längsrichtung verlaufenden Strömungskräften ausgesetzt ist, wird dieser in der Regel im Gewässer nach unten in Richtung auf den Grund geführt. Häufig führt das zum Verhaken in dem Grund, was nicht selten zum Ärger des Anglers mit einem Verlust des Wobblers verbunden ist.

Ein ähnlicher bekannter künstlicher Angelköder ist in DE 20 2004 003 251 U1 beschrieben, welcher als sogenannte leichte Beute einen kranken oder bereits verendeten Fisch symbolisieren soll, in dem dieser mit einem helleren Bauch nach oben und dunkleren Rücken nach unten schwimmt, was dadurch erreicht wird, dass der Schwerpunkt des künstlichen Angelköders in den Rücken gelegt wird. Im vorderen Bereich weist dieser auf dem Bauch schwimmende, Raubfische anlockende Köder ebenfalls eine Tauchschaufel auf, welche vom Kopf weg nach unten weist. Oberhalb dieser Tauchschaufel ist der Angriffspunkt für den Angelhaken angebracht, so dass beim Ziehen dieses Angelköders durch das Gewässer oder bei dessen Anströmung in einem strömenden Gewässer dieser Köder stets im Gewässer nach unten in Richtung auf den Grund oder auf den Grund gezogen wird bzw. sich dorthin bewegt. Des Weiteren ist in

US 2005 008 68 49 A1 ein Sport-Angelhaken zum Spinnfischen beschrieben, welcher zum Erreichen einer starken Wobble-Bewegung im Wasser einen gebogenen Flügelteil mit einer Öffnung darin aufweist, durch welchen die Angelschnur an einen auf den Haken aufgesteckten Köder geführt ist. Dieser aus flexiblem Kunststoffmaterial und aus einer dünnen Platte geringen Auftriebs bestehende Flügel kann gekrümmt oder eben ausgebildet sein und soll beim Ziehen durch das Gewässer eine Schwimmbewegung eines Beutefisches nachahmen. Dieser mehrteilig ausgebildete Kunstköder weist keine den Auftrieb beeinflussende Gewichtseinlage auf und soll sich wegen des aufwärts gebogenen Vorderteils des Flügels unter Zug in Folge des erforderlichen Einholens der Angelschnur im Gewässer kontinuierlich nach oben in Richtung auf die Wasseroberfläche bewegen. Ein Positionieren in einer definierten Höhe über dem Grund ist nicht vorgesehen, so dass Grundfisch wie Zander oder Wels eher nicht anbeißt.

Demgegenüber besteht die Aufgabe der vorliegenden Erfindung darin, einen Kunstköder in Form eines Wobblers zu schaffen, welcher unter Anströmbedingungen im Wasser sich im Wesentlichen in einer gewünschten Tiefe und bei Nachahmung einer natürlichen Beutefischbewegung verbleibt, und zwar ohne dass sich der Wobbler in Richtung auf den Grund des Gewässers bewegt.

Dieses Ziel wird mit einem Kunstköder mit den Merkmalen gemäß Anspruch 1 sowie durch ein System aus einem Kunstköder und einer mit einer Angel verbundenen Angelschnur mit den Merkmalen gemäß Anspruch 10 gelöst.

Zweckmäßige Weiterbildungen sind in den jeweiligen abhängigen Ansprüchen sowohl für den Kunstköder als auch für das System definiert.

Gemäß der Erfindung weist der für den Fischfang vorgesehene Kunstköder, welcher auch als Angelköder bezeichnet wird und in der Form eines sogenannten Wobblers ausgebildet ist, einen Grundkörper aus einem schwimmfähigen Material auf, welcher einem Köderfisch bzw. Beutefisch nachgebildet ist. Der erfindungsgemäße Kunstköder weist mindestens einen Angelhaken auf, welcher an diesem befestigt ist, und ist mit einer Befestigungsöse am Kopfbereich des Grundkörpers zum Verbinden mit einer Angelschnur oder einem Vorfach als Teil der Angelschnur versehen. Der Kunstköder weist im Kopfbereich des Grundkörpers einen schaufelartigen Vorsprung auf. Erfindungsgemäß weist im Benutzungszustand des Kunstköders im Wasser der Vorsprung schräg nach oben und ist die Befestigungsöse unterhalb von dem Vorsprung angeordnet. Das bedeutet, dass der Kunstkörper so ausgebildet ist, dass er beim Schwimmen in einer definierten Wassertiefe z. B. beim Einziehen der Angelschnur vom Grund wegbewegt wird bzw. sich über dem Grund hält. Dazu ist der Winkel, unter welchem der Vorsprung gegenüber der waagrechten Längsachse des Köderfisches nach oben weist, so ausgebildet, dass entsprechend der Strömung des Wassers relativ zu dem Kunstköder der Kunstköder in seiner im Wesentlichen waagerechten oder leicht nach oben geneigten Ausrichtung verbleibt. Dieser schaufelartige Vorsprung trägt dazu bei, dass der Kunstköder nicht nur in der gewünschten Tiefe des Gewässers verbleibt wie beispielsweise beim Ziehen des Kunstköders mittels Einziehen der Angelschnur, sondern auch beim Anströmen des Kunstköders, wenn dieser mittels eines Grundgewichtes an der Angelschnur in einer definierten Tiefe am Boden des Gewässers sozusagen verankert ist und durch eine Gewässerströmung angeströmt wird. Das Material des Grundkörpers und dessen Masseverteilung in Längsrichtung des Kunstköders sind dabei in direkter Abstimmung zu dem Anströmwinkel des schaufelartigen Vorsprungs ausgewählt bzw. dimensioniert, wobei der Grundkörper vorzugsweise als natürlicher Fisch nachgebildet ist und eine Dichte geringer als Wasser aufweist und somit einen nennenswerten Auftrieb aufweist, um nach dem Auswerfen mit Grundgewicht vom Grund aufgrund seines Auftriebs wieder aufzuschwimmen.

Vorzugsweise ist der Grundkörper aus einem schwimmfähigen Material in Form von Kunststoff, Holz oder beispielsweise auch Styrodur oder aus einer Kombination dieser Werkstoffe hergestellt. Dies hat den Vorteil, dass der Grundkörper einfach hergestellt werden kann und nicht als Hohlkörper ausgebildet sein muss. Dadurch entfällt eine Abdichtung gegen das Eindringen von Wasser in einen solchen Hohlkörper, wodurch ein derartiger Kunstkörper verloren wäre.

Im Grundkörper ist eine Gewichtseinlage vorgesehen, welche der Festlegung des Auftriebs des Grundkörpers des Kunstköders und dessen Lagestabilisierung im Wasser dient. Mit dem Vorsehen einer Gewichtseinlage im Grundkörper des Kunstkörpers kann dessen Ausrichtung im Benutzungszustand unter umströmten Bedingungen und unter Beachtung des Anstellwinkels des schaufelartigen Vorsprungs exakt definiert und beeinflusst werden. Ohne Anströmung stellt sich der Kunstköder im Wasser nach oben auf, wird aber beim Ziehen des Kunstköders durchs Wasser durch den schaufelartigen Vorsprung in eine Schwimmlage vom Grund weg in Richtung auf die Wasseroberfläche bewegt. Bei zu wenig oder ohne Gewicht könnte das Kopfteil des Kunstköders nach unten weisen, so dass selbst bei gering nach oben angestelltem schaufelartigem Vorsprung sich der Kunstköder bei seiner Bewegung durch die Strömung im Gewässer nach unten in Richtung auf den Grund bewegen würde. Daher ist es erforderlich, die Gewichtseinlage sowohl auf den Auftrieb, als auch auf die Schwimmposition des Kunstköders im Benutzungszustand wie auch auf den nach oben ausgerichteten Anstellwinkel des schaufelartigen Vorsprungs zu dimensionieren bzw. zu beziehen. Bei Vorhandensein eines Vorfaches wird der Kunstköder selbst bei geringer Gewässerströmung aufschwimmen, bis die Länge des Vorfaches zwischen Grundgewicht und Befestigungsöse die Höhe über dem Grund festlegt, ohne dass der Kunstköder auf den Grund sinkt. Erst recht beim Einziehen der Angelschnur wird der Kunstköder immer vom Grund entfernt sein.

Vorzugsweise ist die Gewichtseinlage im hinteren Drittel des Grundköpers angeordnet, weil dadurch am besten auf die gewünschte Schwimmposition für ein erfolgreiches Fischen von insbesondere Raubfischen hingewirkt werden kann.

Vorzugsweise weist der Grundkörper neben einer Befestigungsöse für die Angelschnur, welche unterhalb des schaufelartigen Vorsprungs angeordnet ist, weitere Ösen für Angelhaken auf, wobei einer der Angelhaken oder ein einziger Angelhaken auch als sogenannter Drillingsangelhaken ausgestaltet sein kann.

Der gemäß der Erfindung ausgebildete Kunstköder ist wegen der Anordnung des schaufelartigen Vorsprungs im Kopfbereich von seinem Grundkörper drachenartig ausgebildet, so dass er im Rahmen dieser Anmeldung auch als sogenannter Drachenwobbler bezeichnet wird.

Der Kunstköder gemäß der Erfindung kann je nach Größe sowohl für das Angeln bzw. Fischen in Binnengewässern verwendet als auch in der Hochseefischerei, insbesondere auch in der industriell betriebenen Hochseefischerei und dort vor allen Dingen für die Langleinenfischerei, eingesetzt werden.

Die unterhalb des schaufelartigen Vorsprungs am Kopfteil des Grundkörpers des Kunstköders angeordnete Befestigungsöse für die Angelschnur dient in vorteilhafter Weise auch für die Ausbildung eines Vorfaches mittels der Angelschnur, wenn diese in einem definierten Abstand zu der Befestigungsöse ein Grundgewicht aufweist, mittels welchem eine gewisse Verankerung des Kunstköders auf dem Gewässergrund erreicht wird. Die Länge des Vorfaches zwischen dem Grundgewicht und der Befestigungsöse für den Kunstköder legt die Höhe des Kunstköders über dem Grund und damit dessen Tiefe im Gewässer fest. Vorzugsweise ist das Grundgewicht mittels eines Wirbels an der Angelschnur befestigt. Dadurch besteht die Möglichkeit, dass sich der Kunstköder auch um die zeitweilige Verankerungsstelle in einem durch die Länge des Vorfaches definierten Radius bewegt.

Vorzugsweise ist der Kunstköder einteilig ausgebildet, d. h. der Grundkörper des Kunstköders und der schaufelartige Vorsprung bilden ein im Wesentlichen steif ausgebildetes Teil. Es ist jedoch auch möglich, dass der Grundkörper aus zwei miteinander verbindbaren Teilen besteht, wobei dessen vorderer Teil als Kopfteil mit dem schaufelartigen Vorsprung und unter diesem die Befestigungsöse für die Angelschnur ausgebildet sind. An seinem dem Schwanzende zugewandten Ende ist ein Koppelelement zur Verbindung mit einem Schwanzteil als zweitem Teil des Kunstköders vorgesehen. Durch die gelenkartige und bewegliche Verbindung des Kopfteils mit dem Schwanzteil ist eine weitere zusätzliche, der natürlichen Bewegung eines Beutefisches angepasste Bewegung des Kunstköders in seinem Benutzungszustand bei vorhandener Anströmung gegeben.

Auch bei diesem zweiteilig ausgebildeten Kunstköder ist ein Gewicht in Form einer Gewichtseinlage vorgesehen. Der Kopfteil weist dabei eine Befestigungsöse für den Angelhaken auf, während im hinteren Drittel des Kopfteiles das Gewicht bzw. die Gewichtseinlage vorgesehen ist. Der hintere Teil des zweigeteilten Wobblers, d. h. dessen Schwanzteil, weist in auswechselbarer Weise beispielsweise einen sogenannten Gummifisch oder einen Twister auf. Ein Twister dient dazu, dem Wobbler eine zusätzliche Bewegungskomponente zu verleihen, wenn dieser im Wasser umströmt wird oder durch das Wasser bewegt wird.

Der wegen seines breiten schaufelartigen Vorsprunges in einer Strömung aufwärts wobbeInde, daher auch als sogenannter Drachenwobbler bezeichnete erfindungsgemäße Kunstköder verbindet das Spinnfischen mit dem Grundfischen, da sich der Drachenwobbler im Wasser selbst bei geringer Strömung bewegt und wegen seiner gewissen Verankerung durch ein Grundgewicht im Abstand vom Grund schwimmt und somit sich am Grund nicht verhaken kann. Über den Wirbel am Grundgewicht wird die Angelschnur mit der Vorfachschnur verbunden.

Vorzugsweise sollte die Vorfachschnur mindestens eine Länge von 120 cm haben, damit der Wobbler weit genug vom Grund des Gewässers entfernt ist, so dass beim Einholen der Angelschnur dessen Abreißen verhindert werden kann.

Dadurch, dass der Drachenwobbler neben einer Gewichtseinlage in Form beispielsweise eines Blei- oder Metallstreifens vorzugsweise ein Grundgewicht und damit ein höheres Gewicht aufweist, als wenn der Wobbler nur aus dem schwimmfähigen Material hergestellt wäre, kann der Wobbler über eine viel größere Distanz ausgeworfen werden. Eine Wurfweite von ca. 100 m kann ohne weiteres erreicht werden. Bei herkömmlichen Wobblern ohne ein Ausgleichsgewicht und ohne Grundgewicht beträgt die Wurfweite häufig nicht mehr als 30 m.

Gemäß einem zweiten Aspekt der Erfindung weist ein erfindungsgemäßes System einen Kunstköder und eine mit einer Angel verbundene Angelschnur auf. Der Kunstköder weist in seinem Kopfbereich einen Vorsprung auf, welcher schaufelartig, auftriebsflügelartig und sich zur Vorderkante hin verbreiternd ausgebildet ist. Unterhalb dieses Vorsprungs ist eine Befestigungsöse vorgesehen, welche bei angezogener Angelschnur mit entsprechendem Grundgewicht ein Vorfach definiert. Am Grundgewicht ist ein Wirbel vorgesehen, so dass der Kunstköder sozusagen auf dem Grund entsprechend der Länge des Vorfaches in einer definierten Tiefe gehalten werden kann. Mit dem im Grundkörper des Kunstköders vorhandenen Gewicht, d. h. einer dort vorhandenen Gewichtseinlage, wird zusammen mit der aufwärts gerichteten Schaufel der Kunstköder bei seiner Anströmung im Wasser in einer definierten Schwimmlage gehalten. Das erfindungsgemäße System ist vor allen Dingen von Vorteil, wenn es in einem Gewässer eingesetzt wird, in dem nur relativ geringe Strömungen vorhanden sind. Denn bereits bei relativ geringen Strömungen wird mittels des erfindungsgemäßen Kunstköders erreicht, dass dieser sich mit einer tänzelnden Schwimmbewegung im ihn umströmenden Wasser bewegt, welche der natürlichen Schwimmbewegung eines Beutefisches sehr nahekommt.

Damit der Kunstköder bezüglich seiner Verankerung mittels des Grundgewichts sich auch entsprechend der Länge des Vorfaches auf einer Kreisbahn bewegen kann, ist an dem Grundgewicht ein Wirbel an dessen Befestigungsöse befestigt.

Vorzugsweise weist der Kunstköder am Bauch und/oder Schwanzbereich einen Angelhaken auf. Ein Angelhaken oder mehrere Angelhaken können dabei vorgesehen sein und können auch als sogenannte Drillingshaken ausgebildet sein.

Weitere Vorteile und Anwendungsmöglichkeiten werden nun anhand von zwei Ausführungsbeispielen in der nachfolgenden Zeichnung detailliert erläutert. Es zeigen:
- Figur 1: einen erfindungsgemäßen als Wobbler ausgebildeten Kunstköder als schwimmendes System mit Verankerung auf dem Grund eines Gewässers mittels eines Grundgewichts; und
- Figur 2: ein zweigeteilter Wobbler mit Kopfteil und Schwanzteil.

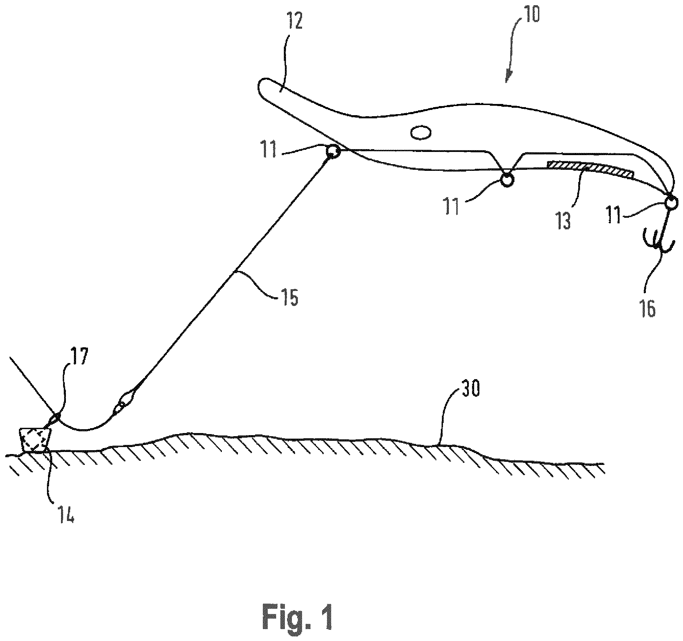

In Figur 1 ist ein erstes Ausführungsbeispiel eines erfindungsgemäßen als Wobbler ausgebildeten Kunstköder 10 bzw. Drachenwobblers gezeigt. Der Wobbler 10 ist aus einem schwimmfähigen Material wie Holz, Kunststoff oder Styrodur hergestellt und weist damit eine Dichte auf, welche geringer ist als Wasser. In seiner äußeren Form imitiert der Wobbler einen Köderfisch in Farbe und Form. Im hinteren Bereich weist der Wobbler 10 eine Gewichtseinlage auf, während im vorderen Bereich der Grundkörper des Wobblers einen schaufelartigen Vorsprung 12 in Form einer Verlängerung aufweist. Dieser schaufelartige Vorsprung 12 ist bezogen auf die waagerechte Längsachse des Wobblers nach oben gerichtet, so dass bezogen auf eine Strömung im im Wesentlichen waagerechten Schwimmzustand des Wobblers ein Strömungsanstellwinkel an der Unterseite des Vorsprungs gebildet wird. Unterhalb des schaufelartigen Vorsprungs 12 ist eine Befestigungsöse für eine Vorfachschnur 15 vorgesehen, welche Teil der Angelschur ist. Dieses Endteil der Angelschnur, die Vorfachschnur 15, ist über einen sogenannten Wirbel 17 mit einem Grundgewicht 14 verbunden, von wo aus die Angelschnur zur Angel geführt ist. Das Grundgewicht 14 sichert eine gewisse Verankerung des Wobblers 10 in einer Tiefe ab, welche entsprechend der Länge des Vorfaches 15 in einem definierten Abstand über dem Gewässergrund 30 gehalten ist.

Über ein im Inneren des Grundkörpers des Wobblers 10 vorhandenes Drahtsystem sind im Bauchbereich des Wobblers und an dessen Ende jeweils weitere Befestigungsösen 11 vorgesehen. Diese weiteren Befestigungsösen dienen der Befestigung von Angelhaken, von dem beispielhaft in der hinteren Befestigungsöse 11 ein Drillingshaken 16 prinzipiell dargestellt ist. Die in Form eines streifenförmig im Inneren des Wobblers angeordnete Gewichtseinlage 13, welche auch aus Blei ausgebildet sein kann, ist bezüglich ihres Gewichtes so dimensioniert, dass der Wobbler unter Berücksichtigung einer Anströmung im Gewässer, sei es durch Einziehen der Angelschnur oder durch natürliche Wasserströmung im Gewässer, in einer im Wesentlichen waagerechten, d. h. die natürliche Schwimmlage eines Beutefisches imitierenden Anordnung, ausgerichtet bzw. gehalten ist. Es kommt also dabei auf eine genaue Dimensionierung zwischen Größe und Anstellwinkel des schaufelartigen Vorsprungs und Größe und Gewicht der Gewichtseinlage 13 einschließlich des für den Grundkörper des Wobblers 10 verwendeten Materials an. Die genaue Abstimmung der jeweiligen Teile bzw. Materialien, aus denen der Wobbler besteht, liegen im Belieben des Durchschnittsfachmanns, wenn dieser vor die Aufgabe gestellt ist, den Wobbler unter den in Figur 1 angegebenen Bedingungen im Wesentlichen in waagerechter Schwimmlage zu halten.

Wenn der Wobbler 10 gemäß Figur 1 durch Einziehen der Angelschnur über den Grund bewegt wird, so bewegt sich auch das Grundgewicht 14 über den Grund. Der Wobbler 10 bleibt dabei im Wesentlichen in der entsprechenden Wassertiefe über dem Grund, so dass die Gefahr des Verhakens des Wobblers im Grund oder mit auf dem Grund vorhandenen Pflanzen oder Steinen oder anderen Gegenständen weitestgehend ausgeschlossen wird. Der Verlust eines Wobblers beim Einziehen der Angelschnur wird dadurch deutlich verringert. Die unter einem nach oben gerichteten Anstellwinkel angeordnete Schaufel bzw. der schaufelartige Vorsprung 12 sichert in Verbindung mit dem Ausgleichsgewicht einen gleichmäßigen Auftrieb während der Bewegung des Wobblers durch das Wasser, so dass neben der im Wesentlichen waagerechten Bewegung des Wobblers im Wasser auch eine gewisse tänzelnde Bewegung, wie es ein Beutefisch normalerweise tut, imitiert wird. Dadurch erfährt der Wobbler eine der natürlichen Bewegung eines Beutefisches weitestgehend nachempfundene Bewegung, welche die Grundlage für einen erfolgreichen Fischfang bietet.

Für Binnengewässer, wenn Raubfische wie beispielsweise Hechte gefangen werden sollen, bietet sich als Größe für einen derartigen Wobbler eine Länge von ca. 15 cm an, wobei die Gewichtseinlage ca. 40 g sein kann. Die Verwendung von Blei hat dabei den Vorteil, dass eine relativ große Dichte die für die Stabilität des Wobblers erforderliche Gewichtskonzentration in vorteilhafter Weise bietet. Der schaufelartige Vorsprung kann dabei ca. 3 bis 4 cm lang sein und sich in Richtung der Vorderkante auf 2 bis 2,5 cm verbreitern. Diese Form kann selbstverständlich variieren und hängt von der zu erzielenden Schwimmbewegung im Gewässer ab.

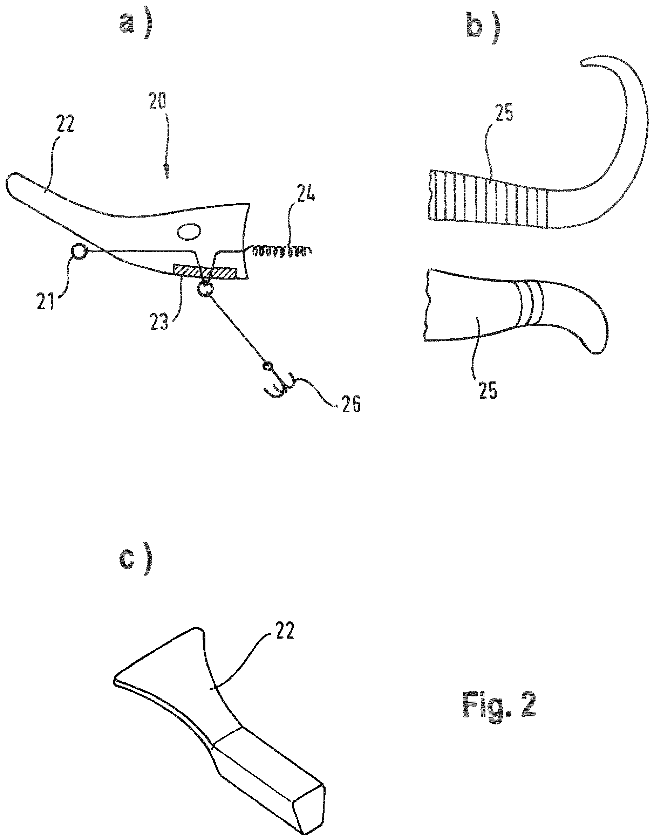

In Figur 2 ist gemäß einem zweiten Ausführungsbeispiel ein zweigeteilter Wobbler 20 dargestellt. Der Grundaufbau ähnelt dem gemäß Figur 1, wobei der Wobbler jedoch aus zwei Teilen besteht. Dies ist zum einen der Kopfteil, welcher einen schaufelartigen Vorsprung 22 mit an dessen Unterseite angeordneter Befestigungsöse 21 aufweist. Die Gewichtseinlage 23 befindet sich im hinteren Drittel des vorderen Kopfteils. In diesem Bereich befindet sich auch eine weitere Befestigungsöse für beispielsweise einen weiteren Drillingshaken 26. Am Ende des Kopfteils ist ein Koppelelement 24 in Form einer korkenzieherartigen Wendelung ausgebildet, wofür der im Inneren des Grundkörpers des Wobblers 20 zur Verbindung der Befestigungsösen 21 miteinander vorhandene Draht, vorzugsweise als Edelstahldraht, verwendet wird. An das Koppelelement 24 kann ein entsprechend ausgestaltetes Schwanzteil in Form eines sogenannten Twisters 25 oder Gummifisches befestigt werden. Aufgrund der Flexibilität des relativ dünnen Drahtes für das Koppelelement 24 ist für die Nachahmung der natürlichen Bewegung eines Beutefisches eine zusätzliche seitliche Schwanzbewegung imitierbar. In Verbindung mit einer speziellen Gestaltung des schaufelartigen Vorsprungs 22 und des Twisters 25 kann bei einer Bewegung des Wobblers 20 durch das Wasser bzw. bei einer Strömung des Wassers an dem Wobbler 20 vorbei eine zusätzliche seitliche Bewegung des Schwanzteils relativ unabhängig vom Kopfteil erreicht werden. Der Kopfteil ist in Figur 2a gezeigt, wohingegen die Schwanzteile 25 in Figur 2b gezeigt sind. In Figur 2c ist eine prinzipielle Draufsicht eines sich nach vorn verbreiternden schaufelartigen Vorsprungs 22 für den Kopfteil des Wobblers 20 dargestellt.

Bei entsprechend gewähltem Anstellwinkel des schaufelartigen Vorsprungs 12 bzw. 22 ist es mit Abstimmung der Größe der Gewichtseinlage 13 bzw. 23 auch möglich, dass bei entsprechender Anströmung bzw. beim Ziehen des Wobblers 10, 20 durch das Gewässer ein Aufsteigen des Wobblers realisiert wird, wenn nicht mit einer Vorfachschnur und einem Grundgewicht gearbeitet wird.

### Bezugszeichenliste

- 10: Wobbler
- 11: Befestigungsöse
- 12: schaufelartiger Vorsprung
- 13: Gewichtseinlage
- 14: Grundgewicht
- 15: Vorfachschnur
- 16: Drillingshaken
- 17: Wirbel
- 20: zweiteiliger Wobbler
- 21: Befestigungsöse
- 22: schaufelartiger Vorsprung
- 23: Gewichtseinlage
- 24: Koppelelement
- 25: Schwanzteil
- 26: Drillingshaken
- 30: Gewässergrund

## Patentansprüche

1. Schwimmfähiger WobblerKunstköder (10, 20) für den Fischfang unter Wasser, umfassend einen Grundkörper in Nachbildung eines Köderfisches, an welchem mindestens ein Angelhaken befestigt ist, und mit einer im Kopfbereich des Grundkörpers angeordneten Befestigungsöse (11, 21) zum Verbinden mit einer Angelschnur oder einem Vorfach (15) sowie mit einem im Kopfbereich des Grundkörpers angeordneten schaufelartigen Vorsprung (12; 22),
wobei der Vorsprung (12, 22) des Kunstköders (10, 20) gegenüber seiner waagerechten Längsachse, einen Anstellwinkel dazu bildend, schräg nach oben weist, und die Befestigungsöse (11, 21) an der Unterseite und unterhalb von dem Vorsprung (12, 22) angeordnet ist,
**dadurch gekennzeichnet, dass** der Vorsprung (12, 22) sich nach vorn zu seiner Vorderkante verbreitert.

2. Kunstköder (10, 20) gemäß Anspruch 1, **dadurch gekennzeichnet, dass** der Grundkörper aus Kunststoff, Holz oder Styrodur oder aus einer Kombination dieser Werkstoffe hergestellt ist.

3. Kunstköder (10, 20) gemäß Anspruch 1 oder 2, **dadurch gekennzeichnet, dass** der Grundkörper mit einer Gewichtseinlage (13, 23) zur Festlegung des Auftriebs, der Lagestabilisierung im Wasser und des Anstellwinkels des Vorsprunges (12, 22) versehen ist.

4. Kunstköder (10, 20) gemäß Anspruch 3, **dadurch gekennzeichnet, dass** die Gewichtseinlage (13, 23) im hinteren Drittel des Grundkörpers angeordnet ist.

5. Kunstköder (10, 20) gemäß Anspruch 4, **dadurch gekennzeichnet, dass** die Gewichtseinlage im Kunstköder derart angeordnet und dimensioniert ist, dass der Anstellwinkel des schaufelartigen Vorsprungs in einer Anströmung einen eine im Wesentlichen waagerechte Schwimmlage erzeugenden gleichmäßigen Auftrieb des Kunstköders unter Wasser sichert.

6. Kunstköder gemäß einem der voranstehenden Ansprüche, **dadurch gekennzeichnet, dass** der Grundkörper mehrere Befestigungsösen (11, 21) für Angelhaken aufweist oder mit mindestens einem Drillingsangelhaken (16, 26) versehen ist.

7. Kunstköder (10, 20) gemäß einem der voranstehenden Ansprüche, **dadurch gekennzeichnet, dass** an der Befestigungsöse (11, 21) für ein Vorfach (15) mit einem weiteren Gewicht als Grundgewicht (14) ein Wirbel (17) für eine Angelschnur befestigbar ist.

8. Kunstköder (20) gemäß einem der voranstehenden Ansprüche, **dadurch gekennzeichnet, dass** der Grundkörper aus zwei miteinander verbindbaren Teilen besteht, wobei der vordere Teil als Kopfteil mit der Befestigungsöse (21) und dem Vorsprung (22) ausgebildet ist und ein Koppelelement (24) zur Verbindung mit einem Schwanzteil (25) aufweist.

9. Kunstköder gemäß Anspruch 8, **dadurch gekennzeichnet, dass** der Kopfteil mindestens eine Befestigungsöse (21) zur Befestigung eines Angelhakens und eine im hinteren Drittel angeordnete Gewichtseinlage (23) aufweist.

10. System aus einem Kunstköder (10, 20) gemäß einem der Ansprüche 1 bis 9 und aus einer mit einer Angel verbunden Angelschnur, **dadurch gekennzeichnet, dass** an der unterhalb der auftfiebsflügelartigen Schaufel (12, 22) am Kopfbereich des Kunstköders (10, 20) angebrachten Befestigungsöse (11, 21) ein Vorfach (15) befestigt ist und das Vorfach ein Grundgewicht (14) aufweist, welches mittels der im Körper des Kunstkörpers (10, 20) befindlichen, dessen Schwimmlage stabilisierenden Gewichtseinlage (13, 23) den Kunstköder zusammen mit der aufwärts weisenden Schaufel (12, 22) bei seiner Anströmung im Wasser in einer definierten Wassertiefe Seite 3, Zeile 25 in einer im Wesentlichen waagerechten Schwimmlage hält.

11. System nach Anspruch 10, **dadurch gekennzeichnet, dass** das Vorfach mittels eines Wirbels (17) an der Befestigungsöse (11, 21) befestigt ist.

12. System nach Anspruch 10 oder 11, **dadurch gekennzeichnet, dass** der Kunstköder (10, 20) am Bauch- und/oder Schwanzbereich den Angelhaken aufweist.

## Claims

1. Buoyant wobbler lure (10, 20) for fishing underwater, comprising a main body mimicking a bait fish to which at least one fishhook is fastened, and having a fastening eyelet (11, 21) for connecting to a fishing line or a trace (15) which eyelet is disposed in the head region of the main body, and having a blade-type protrusion (12; 22) that is disposed in the head region of the main body, wherein the protrusion (12, 22) of the lure (10, 20) in relation to the horizontal longitudinal axis thereof, while forming an angle of attack thereto, points obliquely upwards, and the fastening eyelet (11, 21) is disposed on the lower side and below the protrusion (12, 22), **characterized in that** the protrusion (12, 22) widens towards the front towards the front edge of said protrusion (12, 22).

2. Lure (10, 20) according to Claim 1, **characterized in that** the main body is produced from plastics material, wood, or Styrodur, or from a combination of said materials.

3. Lure (10, 20) according to Claim 1 or 2, **characterized in that** the main body for establishing the buoyancy, the positional stabilizing in water, and the angle of attack of the protrusion (12, 22) is provided with a weight insert (13, 23).

4. Lure (10, 20) according to Claim 3, **characterized in that** the weight insert (13, 23) is disposed in the rear third of the main body.

5. Lure (10, 20) according to Claim 4, **characterized in that** the weight insert is disposed and dimensioned in the lure in such a manner that the angle of attack of the blade-type protrusion in an incident flow ensures uniform buoyancy of the lure underwater said buoyancy generating a substantially horizontal floating position.

6. Lure according to one of the preceding claims, **characterized in that** the main body has a plurality of fastening eyelets (11, 21) for fishhooks, or is provided with at least one treble fishhook (16, 26).

7. Lure (10, 20) according to one of the preceding claims, **characterized in that** a swivel (17) for a fishing line, having a further weight as a ground weight (14), is capable of being fastened to the fastening eyelet (11, 21) for a trace (15).

8. Lure (20) according to one of the preceding claims, **characterized in that** the main body is composed of two parts that are connectable to one another, wherein the front part is configured as a head part having the fastening eyelet (21) and the protrusion (22) and has a coupling element (24) for connecting to a tail part (25).

9. Lure according to Claim 8, **characterized in that** the head part has at least one fastening eyelet (21) for fastening a fishhook, and a weight insert (23) that is disposed in the rear third.

10. System from a lure (10, 20) according to one of Claims 1 to 9 and from a fishing line that is connected to a fishing rod, **characterized in that** a trace (15) is fastened to the fastening eyelet (11, 21) that is attached below the buoyancy-wing-type blade (12, 22) on the head region of the lure (10, 20), and the trace has a ground weight (14) which, by means of the weight insert (13, 23) that is situated in the body of the lure (10, 20) and stabilizes the floating position of said lure (10, 20), conjointly with the upwards-pointing blade (12, 22) in the event of an incident flow thereon in the water holds the lure in a substantially horizontal floating position at a defined water depth page 3, line 25.

11. System according to Claim 10, **characterized in that** the trace is fastened to the fastening eyelet (11, 21) by means of a swivel (17).

12. System according to Claim 10 or 11, **characterized in that** the lure (10, 20) has the fishhook on the belly and/or tail region.

## Revendications

1. Leurre (10, 20) baladeur flottant pour la pêche sous l'eau, comprenant un corps de base simulant un poisson-appât auquel est fixé au moins un hameçon, et comprenant un oeillet de fixation (11, 21) disposé dans la zone de tête du corps de base et servant à la liaison avec une ligne de pêche ou un bas de ligne (15) et comprenant également une partie saillante (12 ; 22) en forme d'aube disposée dans la zone de tête du corps de base,
la partie saillante (12 ; 22) du leurre (10, 20) étant orientée en biais vers le haut par rapport à son axe longitudinal horizontal en formant à cet effet un angle d'incidence et, l'œillet de fixation (11, 21) étant disposé au niveau du côté inférieur et au-dessous de la partie saillante (12 ; 22),
**caractérisé en ce que**
la partie saillante (12 ; 22) s'élargit vers l'avant vers son bord avant.

2. Leurre (10, 20) selon la revendication 1, **caractérisé en ce que** le corps de base est fabriqué en matière plastique, en bois ou en Styrodur ou en une combinaison de ces matériaux.

3. Leurre (10, 20) selon la revendication 1 ou 2, **caractérisé en ce que** le corps de base est pourvu d'un insert de lest (13, 23) destiné à définir la poussée verticale, la stabilisation de position dans l'eau et l'angle d'incidence de la partie saillante (12 ; 22).

4. Leurre (10, 20) selon la revendication 3, **caractérisé en ce que** l'insert de lest (13, 23) est disposé dans le tiers arrière du corps de base.

5. Leurre (10, 20) selon la revendication 4, **caractérisé en ce que** l'insert de lest est disposé dans le leurre et dimensionné de telle sorte que l'angle d'incidence de la partie saillante en forme d'aube, dans un afflux, garantit une poussée verticale régulière du leurre sous l'eau, qui génère une position de flottage sensiblement horizontale.

6. Leurre selon l'une des revendications précédentes, **caractérisé en ce que** le corps de base possède plusieurs oeillets de fixation (11, 21) pour des hameçons ou est pourvu d'au moins un hameçon de levage (16, 26).

7. Leurre (10, 20) selon l'une des revendications précédentes, **caractérisé en ce qu'**un émerillon (17) pour une ligne de pêche peut être fixé à l'œillet de fixation (11, 21) pour un bas de ligne (15) muni d'un poids supplémentaire en tant que poids de base (14).

8. Leurre (20) selon l'une des revendications précédentes, **caractérisé en ce que** le corps de base se compose de deux parties qui peuvent être reliées ensemble, la partie avant étant réalisée sous la forme d'une partie de tête munie de l'œillet de fixation (21) et de la partie saillante (22) et possédant un élément de couplage (24) servant à la liaison avec une partie de queue (25).

9. Leurre selon la revendication 8, **caractérisé en ce que** la partie de tête possède au moins un œillet de fixation (21) destiné à fixer un hameçon et un insert de lest (23) disposé dans le tiers arrière.

10. Système composé d'un leurre (10, 20) selon l'une des revendications 1 à 9 et d'une ligne de pêche reliée à une canne à pêche, **caractérisé en ce qu'**un bas de ligne (15) est fixé à l'œillet de fixation (11, 21) monté dans la zone de tête du leurre (10, 20), au-dessous de l'aube (12, 22) en forme d'aileron de poussée verticale, et le bas de ligne possède un poids de base (14) qui, au moyen de l'insert de lest (13, 23) qui se trouve dans le corps du leurre (10, 20) et qui stabilise sa position de flottage, maintient le leurre, conjointement avec l'aube (12, 22) orientée vers le haut dans une position de flottage sensiblement horizontale dans l'eau à une profondeur d'eau définie page 3, ligne 25, lors de son exposition à un afflux.

11. Système selon la revendication 10, **caractérisé en ce que** le bas de ligne est fixé à l'œillet de fixation (11, 21) au moyen d'un émerillon (17).

12. Système selon la revendication 10 ou 11, **caractérisé en ce que** le leurre (10, 20) possède l'hameçon au niveau de la zone du ventre et/ou de la queue.
